# EUROPÄISCHE PATENTSCHRIFT

(11) **EP 0 988 462 B1**
(45) Veröffentlichungstag und Bekanntmachung des Hinweises auf die Patenterteilung: **23.10.2002**
(21) Anmeldenummer: 97954825.2
(22) Anmeldetag: 19.12.1997
(51) Int. Cl.: F16D 25/08

(54) **REIBUNGSKUPPLUNG**
FRICTION CLUTCH
EMBRAYAGE A FRICTION

(30) Priorität: 19.12.1996 DE 1965277
(43) Veröffentlichungstag der Anmeldung: 29.03.2000
(73) Patentinhaber: Volkswagen Aktiengesellschaft, 38436 Wolfsburg (DE); LuK Lamellen und Kupplungsbau Beteiligungs KG, 77813 Bühl (DE)
(72) Erfinder: HERZIG, Stefan, D-38547 Calberlah (DE); OSTERLÄNGER, Jürgen, D-91448 Emskirchen (DE); GRELL, Karl-Ludwig, D-91086 Aurachtal (DE); STRIAN, Ernst, D-91358 Kunreuth (DE); MIERSCH, Rainer, D-38471 Rühen (DE)
(86) Internationale Anmeldenummer: EP9707188
(87) Internationale Veröffentlichungsnummer: WO98027351

(56) Entgegenhaltungen:
- DE-A- 4 120 643
- FR-A- 2 700 822
- GB-A- 2 116 283
- GB-A- 2 164 494
- US-A- 4 867 294

## Beschreibung

Die Erfindung betrifft eine Reibungskupplung für Kraftfahrzeuge mit einer zwischen Bauteilen einspannbaren Kupplungsscheibe, die drehfest auf einer Getriebewelle sitzt, einer Kupplungsfeder zum Einspannen der Kupplungsscheibe zwischen den beiden Bauteilen, einer Kupplungsbetätigungseinrichtung mit einer kupplungsnahen Nehmereinrichtung einer kupplungsfernen Gebereinrichtung sowie einer dazwischen angeordneten Übertragungseinrichtung, wobei die kupplungsnahe Nehmereinrichtung ein feststehendes konzentrisch zu der Getriebewelle angeordnetes Gehäuse mit einem radial innenliegenden axialen Fortsatz und einem radial außenliegeden axialen Fortsatz, die konzentrisch zueinander einen Ringraum bildend angeordnet sind, und einem in dem Ringraum bewegbaren und mit der Kupplungsscheibe kraftschlüssig in Verbindung stehenden Kolben, wobei dem Gehäuse ein Wegsensor zugeordnet ist.

Eine Reibungskupplung der oben genannten Art ist z. B. in der deutschen Offenlegungsschrift DE 41 20 643 A1 beschrieben. In dem dortigen Nehmerzylinder ist ein Wegsensor mit einem veränderlichen Widerstand, einer veränderlichen Kapazität oder einer veränderlichen Induktion vorgesehen. Die Funktion der Wegsensoren kann durch Verunreinigungen, wie z. B. durch Bestandteile des Kupplungsreibbelages oder aus dem Motorraum heraustretendes Öl beeinträchtigt werden.

In der US Patentschrift US 4,705,151 ist ebenfalls ein Nehmerzylinder einer Nehmereinrichtung beschrieben, der einen Wegsensor mit einer veränderlichen Induktivität, Kapazität, Widerstand oder Induktion aufweist. Der dort beschriebene Wegsensor ist jedoch lediglich dazu vorgesehen, eine Extremstellung des Kolbens anzuzeigen. Die Messung der Stellung des Kolbens über den gesamten Verschiebeweg ist mit einem derartigen Wegsensor nicht möglich.

Aufgabe der Erfindung ist es eine Möglichkeit zu schaffen, mit der die Stellung eines Kolbens in einem feststehenden Nehmerzylinder einer kupplungsnahen Nehmereinrichtung zur Betätigung einer Reibungskupplung möglichst unabhängig von äußeren Einflüssen wie Verschmutzung, Erschütterungen oder Einflüsse durch benachbarte Bauteile, sensiert werden kann.

Die Aufgabe wird erfindungsgemäß durch die Merkmale des Anspruchs 1 gelöst. Vorteilhafte Aus- und Weiterbildungen sind in den Unteransprüchen gegeben.

Der Wegsensor ist durch die Anordnung an der radial nach innen gerichteten Seite des radial innen liegenden axialen Fortsatzes vor Verunreinigungen durch z. B. herabfallende Teile des Kupplungsbelages oder aus dem Motorraum austretende Öldämpfe durch den radial innenliegenden axialen Fortsatz geschützt.

Der Wegsensor ist zweckmäßigerweise länglich ausgebildet und erstreckt sich im wesentlichen parallel zu dem Verschiebeweg des Kolbens wodurch die Längsbewegung des Kolbens besonders gut sensiert werden kann.

Von Vorteil ist es weiterhin, wenn der Wegsensor aus einer veränderlichen Induktivität besteht, dadurch kann eine elektrische Verbindung mit dem bewegbaren Kolben entfallen.

Ferner wird vorgeschlagen, daß der Kolben aus einem nichtferromagnetischen elektrisch leitfähigen Metall besteht oder zumindest nichtferromagnetische elektrisch leitfähige metallische Bestandteile enthält oder mit diesen in fester Verbindung steht. Durch die Bewegung des Kolbens wird in dem nichtferromagnetischen elektrisch leitfähigen Metall ein Wirbelstrom induziert, durch den die Induktivität des Wegsensors verändert wird. Der Wegsensor ist Bestandteil eines Schwingkreises bestehend aus einer Kapazität und einer Induktivität. Durch die Veränderung der Induktivität des Wegsensors wird die an der Spule anliegende Wechselspannung und damit die Resonanzfrequenz des Schwingkreises verändert. Die Veränderung der Resonanzfrequenz dient dann als Meßsignal für den Verschiebeweg des Kolbens. Bei einer derartigen Sensoranordnung muß lediglich der Wegsensor mit einem elektrischen Kabel verbunden werden, der Kolben selbst muß nicht mit einem elektrischen Kabel verbunden werden. Die Verbindung eines bewegten Teiles mit einem Kabel ist somit nicht erforderlich.

Eventuell benachbart vorhandene ferromagnetische Bauteile, wie z. B. die Getriebewelle oder andere Teile, haben auf das Meßsignal keinen Einfluß. Die magnetische Permeabilität µᵣ von ferromagnetischen Bauteilen ist wesentlich größer als 1, aus diesem Grunde sind die in den ferromagnetischen Bauteilen induzierten Wirbelströme gegenüber den Wirbelströmen in den nichtferromagnetischen Bauteilen mit einer magnetischen Permeabilität von µᵣ ungefähr 1 vernachlässigbar. Erschütterungen oder Verunreinigungen haben, wie sich aus Versuchen ergeben hat, keinen Einfluß auf das Meßergebnis.

Besonders vorteilhaft ist es, wenn das nichtferromagnetisch elektrisch leitfähige Metall Aluminium ist. Aluminium hat den Vorteil, daß es einen besonders geringen elektrischen Widerstand hat und besonders leicht ist. Durch die gute elektrische Leitfähigkeit wird ein besonders gutes Meßsignal erreicht. Das geringe Gewicht des Werkstoffes ist in sofern vorteilhaft, das möglichst wenig Masse bei einer Ausrückbewegung bewegt werden muß.

Weiterhin wird vorgeschlagen den Nehmerzylinder zwei- oder mehrteilig auszubilden und zumindest im Bereich zwischen dem Wegsensor und dem Kolben aus einem amagnetischen Werkstoff herzustellen. Dadurch wird eine Abschirmung des von dem Wegsensor erzeugten elektrischen Wechselfeldes durch eine gezielte Wahl des Werkstoffes oder Werkstoffbehandlung verhindert, ohne das der gesamte Nehmerzylinder aus dem Werkstoff hergestellt werden muß oder der Werkstoffbehandlung unterzogen werden muß.

Die Erfindung wird im folgenden anhand eines Ausführungsbeispiels näher erläutert. Die Zeichnungen zeigen:
- Figur 1: Prinzipdarstellung einer fluidbetätigten Reibungskupplung;
- Figur 2: kupplungsnahe Nehmereinrichtung mit radial innen liegendem Wegsensor.

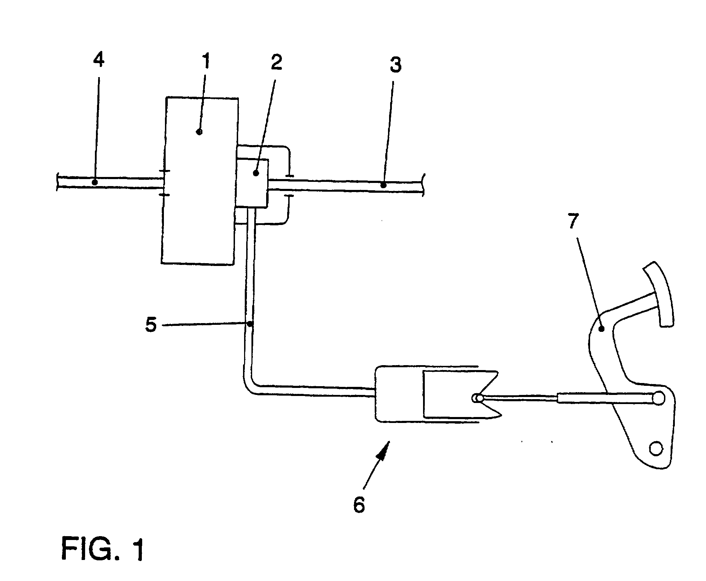

Figur 1 zeigt den prinzipiellen Aufbau einer fluidbetätigten Reibungskupplung. Ausgehend von einem Kupplungspedal 7 wird direkt ein Geberzylinder 6 beaufschlagt, der über eine Druckleitung 5 mit der in der Reibungskupplung 1 angeordneten Nehmereinrichtung 2 in Verbindung steht. Die Nehmereinrichtung 2 ist fest mit dem Gehäuse der Reibungskupplung 1 verbunden, und weist einen durch das Gehäuse 8 und die Führungshülse 9 gebildeten ringförmigen Nehmerzylinder mit dem Druckraum 13 und einen den Druckraum 13 verschließenden und in dem Nehmerzylinder bewegbaren Kolben 11 auf.

Durch Beaufschlagen der Nehmereinrichtung 2 mit Fluid wird es ermöglicht die Reibungskupplung 1 zu öffnen bzw. zu schließen und dadurch die Kraftübertragung von der Kurbelwelle 4 auf die Getriebewelle 3 zu unterbrechen.

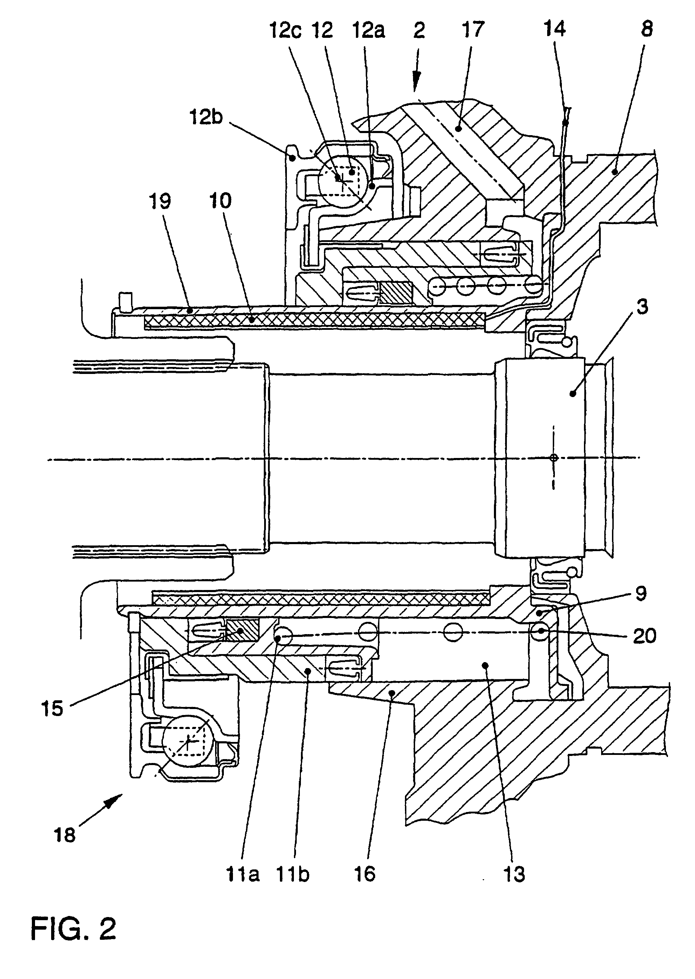

In Figur 2 ist eine Nehmereinrichtung 2 in Schnittdarstellung zu erkennen, wobei oberhalb der Symmetrielinie die Nehmereinrichtung 2 im eingerückten Zustand und unterhalb der Symmetrielinie im ausgerückten Zustand zu erkennen ist.

Die Nehmereinrichtung 2 ist konzentrisch zu der Getriebewelle 3 angeordnet. Die Nehmereinrichtung 2 weist einen Nehmerzylinder, gebildet durch das Gehäuse 8 und die Führungshülse 9, einer zu dem Nehmerzylinder bewegbaren Ausrückeinheit 18 und eine zwischen Nehmerzylinder und Ausrückeinheit 18 angeordnete Feder 20 auf. In dem Gehäuse 8 ist eine Bohrung 17 vorgesehen, die an ihrem einen Ende mit der Druckleitung 5 in Verbindung steht und mit dem anderen Ende in den Druckraum 13 mündet.

Die Ausrückeinheit 18 besteht aus einem Kolben 11 und einem Ausrücklager 12. Der Kolben 11 liegt axial an der nicht umlaufenden Lagerhälfte 12a an. Die umlaufende Lagerhälfte 12b steht in kraftschlüssiger Verbindung mit einer nicht dargestellten ausrückbaren Reibungskupplungshälfte.

Der Kolben 11 ist hier zweiteilig ausgebildet, wobei zwischen beiden Kolbenhälften 11a; 11b ein nicht ferromagnetisch elektrisch leitfähiges metallisches Target 15 angeordnet ist.

Der Druckraum 13 wird gebildet durch die Führungshülse 9 und den axialen Fortsatz 16 des Gehäuses 8. Verschlossen wird der Druckraum 13 durch den bewegbaren Kolben 11. Selbstverständlich können die Führungshülse 9 und das Gehäuse 8 auch einteilig ausgebildet sein.

Eine zweiteilige Ausbildung ist jedoch insofern von Vorteil, da dadurch die Führungshülse 9 aus einem amagnetischen Werkstoff hergestellt werden kann oder einer gezielten Werkstoffbehandlung unterzogen werden kann, ohne daß auch das Gehäuse 8 aus diesem Werkstoff hergestellt werden muß oder dieser Behandlung unterzogen werden muß. Als Werkstoff kann z. B. x5crNi1 oder x5crNiMo 17122 gewählt werden.

Wird das Kupplungspedal 7 betätigt, dann wird ein Druck über den Geberzylinder 6 und die Druckleitung 5 und die Bohrung 17 in dem Druckraum 13 aufgebracht. Der Kolben 11 wird daraufhin in die ausgerückte Stellung, wie unterhalb der Symmetrielinie dargestellt, bewegt. Die Bewegung des Kolben 11 wird dann über die Lagerhälfte 12a, die Lagerkörper 12c und die Lagerhälfte 12b auf die ausrückbare nicht dargestellte Reibungskupplungshälfte übertragen, und dadurch der Kraftfluß von der Kurbelwelle 4 auf die Getriebewelle 3 unterbrochen.

Dem Gehäuse 8 ist ein sich im wesentlichen über den gesamten Verschiebeweg des Kolbens 11 erstreckender Wegsensor 10 zugeordnet.

Der Wegsensor 10 ist aus einem nicht dargestellten Sensorspulenkabel gebildet, an dem eine Wechselspannung anliegt. Durch die anliegende Wechselspannung ist der Wegsensor 10 umgeben von einem elektrischen Wechselfeld. Das Kabel 14 verbindet den Wegsensor 10 mit einer außerhalb der Nehmereinrichtung 2 angeordneten elektrischen Einrichtung zum Auswerten des Meßsignals. Das Kabel 14 kann selbstverständlich mehrere Leitungsstränge enthalten.

Das Target 15 besteht aus einem nichtferromagnetischen elektrisch leitenden Metall z. B. Aluminium. Durch die Bewegung des Kolbens 11 mit dem Target 15 senkrecht zu dem Wechselfeld wird in dem Target 15 ein Wirbelstrom induziert. Nichtferromagnetisch elektrisch leitfähige Metalle weisen eine magnetische Permeabilität µᵣ von ungefähr 1 auf. Ferromagnetisch leitfähige Metalle weisen dagegen eine magnetische Permeabilität von µᵣ wesentlich größer als 1 auf. Die induzierten Wirbelströme in den bewegten ferromagnetisch leitfähigen Metallen, z. B. in der Getriebewelle 3 können deswegen im Vergleich zu den induzierten Wirbelströmen in dem Target 15 vernachlässigt werden. Die genauen Hintergründe über den Einfluß der magnetischen Permeabilität auf die induzierten Wirbelströme sind z. B. nachzulesen in VDI Fortschrittberichte, Reihe 8; Meß-, Steuerungund Regelungstechnik, Nr. 557; Trennung der Einflußgrößen von Wirbelstromsensoren durch Signalverarbeitung mit Hilfe von Felduntersuchung und Modellierung, von M.Sc. Yunqiang Wang, Kassel.

Der induzierte Wirbelstrom in dem Target 15 wirkt nach der Lenz'schen Regel dem elektrischen Wechselfeld entgegen und verändert dadurch die Induktivität des Wegsensors 10 und damit die an ihm anliegende Wechselspannung.

Die Veränderung der Wechselspannung kann direkt als Meßsignal für die Verschiebung des Kolbens 11 verwendet werden. Denkbar wäre auch die durch die Veränderung der Wechselspannung bedingte Veränderung der Resonanzfrequenz eines Schwingkreises, in dem der Wegsensor 10 angeordnet ist, als Meßsignal zu verwenden.

**BEZUGSZEICHENLISTE**
- 1: Reibungskupplung
- 2: Nehmereinrichtung
- 3: Getriebewelle
- 4: Kurbelwelle
- 5: Druckleitung
- 6: Geberzylinder
- 7: Kupplungspedal
- 8: Gehäuse
- 9: Führungshülse
- 10: Wegsensor
- 11: Kolben
- 12: Ausrücklager
- 12a: Lagerhälfte
- 12b: Lagerhälfte
- 12c: Lagerkörper
- 13: Druckraum
- 14: Kabel
- 15: Target
- 16: axialer Fortsatz
- 17: Bohrung
- 18: Ausrückeinheit
- 19: axialer Fortsatz
- 20: Feder

## Patentansprüche

1. Reibungskupplung für Kraftfahrzeuge mit einer zwischen Bauteilen einspannbaren Kupplungsscheibe, die drehfest auf einer Getriebewelle (3) sitzt, einer Kupplungsfeder zum Einspannen der Kupplungsscheibe zwischen den beiden Bauteilen, einer Kupplungsbetätigungseinrichtung mit einer kupplungsnahen Nehmereinrichtung (2) einer kupplungsfernen Gebereinrichtung (6) sowie einer dazwischen angeordneten Übertragungseinrichtung (5) wobei die kupplungsnahe Nehmereinrichtung (2) ein feststehendes konzentrisch zu der Getriebewelle (3) angeordnetes Gehäuse (8) mit einem radial innenliegenden axialen Fortsatz (19) und einem radial außenliegenden axialen Fortsatz (16), die konzentrisch zueinander einen Ringraum bildend angeordnet sind, und einen in dem Ringraum bewegbaren und mit der Kupplungsscheibe kraftschlüssig in Verbindung stehenden Kolben (11) aufweist, wobei dem Gehäuse (8) ein Wegsensor zugeordnet ist,
**dadurch gekennzeichnet, daß**
der Wegsensor (10) an dem radial innenliegenden axialen Fortsatz (19) an dessen radialer Innenseite angeordnet ist.

2. Reibungskupplung nach Anspruch 1, **dadurch gekennzeichnet, daß** der Wegsensor (10) länglich ausgebildet ist und im wesentlichen parallel zu dem Verschiebeweg des Kolbens (11a; 11b) angeordnet ist.

3. Reibungskupplung nach Anspruch 1 oder 2, **dadurch gekennzeichnet, daß** der Wegsensor aus einer veränderlichen Induktivität besteht.

4. Reibungskupplung nach einem der Ansprüche 1 bis 3, **dadurch gekennzeichnet, daß** der Kolben (11a; 11b) aus einem nicht ferromagnetischen elektrisch leitfähigen Metall besteht oder zumindest nicht ferromagnetisch elektrisch leitfähige metallische Bestandteile enthält oder mit diesen in fester Verbindung steht.

5. Reibungskupplung nach Anspruch 4, **dadurch gekennzeichnet, daß** das Metall Aluminium ist.

6. Reibungskupplung nach einem der Ansprüche 1 bis 5, **dadurch gekennzeichnet, daß** der radial innenliegende axiale Fortsatz (19) und der radial außenliegende axiale Fortsatz (16) getrennte Bauteile sind.

7. Reibungskupplung nach einem der Ansprüche 1 bis 6, **dadurch gekennzeichnet, daß** der radial innenliegende axiale Fortsatz (19) aus einem amagnetischen Werkstoff, vorzugsweise X5CrNi1 oder X5CrNiMo17122 besteht.

## Claims

1. Friction clutch for motor vehicles with a clutch disc that can be clamped between components and is mounted in a rotationally fixed manner on a gearbox shaft (3), with a clutch spring for clamping the clutch disc between the two components, with a clutch control device with a slave device (2) nearby the clutch, a master device (6) remoted from the clutch and a transfer device (5) arranged in between, the slave device (2) nearby the clutch comprising a fixed housing (8), arranged concentrically in relation to the gearbox shaft (3), with a radially inner axial extension (19) and a radially outer axial extension (16), which are arranged concentrically in relation to each other in such a way that they form an annular space, and a piston (11), which can be moved in the annular space and is connected to the clutch disc by friction, a distance sensor being arranged to the housing (8), **characterized in that** the distance sensor (10) is arranged on the radially inner axial extension (19), on the radial inside of the latter.

2. Friction clutch according to Claim 1, **characterized in that** the distance sensor (10) is of elongate design and is arranged essentially parallel to the displacement path of the piston (11a; 11b).

3. Friction clutch according to Claim 1 or 2, **characterized in that** the distance sensor consists of a variable inductive sender.

4. Friction clutch according to one of Claims 1 to 3, **characterized in that** the piston (11a; 11b) is composed of a nonferromagnetic, electrically conductive metal or at least contains nonferromagnetic electrically conductive metallic components or is connected firmly to the latter.

5. Friction clutch according to Claim 4, **characterized in that** the metal is aluminium.

6. Friction clutch according to one of Claims 1 to 5, **characterized in that** the radially inner axial extension (19) and the radially outer axial extension (16) are separate components.

7. Friction clutch according to one of Claims 1 to 6, **characterized in that** the radially inner axial extension (19) is composed of a nonmagnetic material, preferably X5CrNi1 or X5CrNiMo17122.

## Revendications

1. Embrayage à friction pour véhicules automobiles comprenant un disque d'embrayage pouvant être serré entre des composants et qui repose fixe en rotation sur un arbre de transmission (3), un ressort d'embrayage pour serrer le disque d'embrayage entre les deux composants, un dispositif d'actionnement d'embrayage comprenant un dispositif preneur (2) proche de l'embrayage, un dispositif donneur (6) éloigné de l'embrayage ainsi qu'un dispositif de transmission (5) disposé entre eux, le dispositif preneur (2) proche de l'embrayage comprenant un boîtier (8) fixe concentrique à l'arbre de transmission (3) avec une extension axiale radialement interne (19) et une extension axiale radialement externe (16), qui sont disposées concentriquement l'une à l'autre en formant un espace annulaire, et un piston (11) déplaçable dans l'espace annulaire et en liaison par friction avec le disque d'embrayage, un capteur de position étant associé au boîtier (8),
**caractérisé en ce que**
le capteur de position (10) est disposé sur l'extension axiale radialement interne (19) sur son côté interne radial.

2. Embrayage à friction selon la revendication 1, **caractérisé en ce que** le capteur de position (10) est réalisé longitudinalement et est disposé essentiellement parallèlement à la course de déplacement du piston (11a ; 11b).

3. Embrayage à friction selon la revendication 1 ou 2, **caractérisé en ce que** le capteur de position se compose d'une inductance variable.

4. Embrayage à friction selon l'une quelconque des revendications 1 à 3, **caractérisé en ce que** le piston (11a ; 11b) se compose d'un métal non ferromagnétique électriquement conducteur ou au moins contient des constituants métalliques non ferromagnétiques électriquement conducteurs, ou est en liaison rigide avec ceux-ci.

5. Embrayage à friction selon la revendication 4, **caractérisé en ce que** le métal est de l'aluminium.

6. Embrayage à friction selon l'une quelconque des revendications 1 à 5, **caractérisé en ce que** l'extension axiale radialement interne (19) et l'extension axiale radialement externe (16) sont des composants distincts.

7. Embrayage à friction selon l'une quelconque des revendications 1 à 6, **caractérisé en ce que** l'extension axiale radialement interne (19) se compose d'un matériau non magnétique, de préférence du X5CrNi1 ou du X5CrNiMo17122.
